# EUROPEAN PATENT APPLICATION

(11) **EP 4 266 696 A1**
(43) Date of publication of application: **25.10.2023**
(21) Application number: 21910277.9
(22) Date of filing: 07.12.2021
(51) Int. Cl.: H04R 1/02, H04R 1/24, H04R 7/04

(54) **DISPLAY APPARATUS**

(30) Priority: 21.12.2020 JP 2020210931
(71) Applicant: Sony Group Corporation, Tokyo 108-0075 (JP)
(72) Inventor: IKUMA, Yoshinori, Tokyo 108-0075 (JP); WATANABE, Masayasu, Tokyo 108-0075 (JP); MASUDA, Toshihiko, Tokyo 108-0075 (JP); SUNAOSHI, Shigenori, Tokyo 108-0075 (JP); SEKI, Ryosuke, Tokyo 108-0075 (JP); ENOMOTO, Tsutomu, Tokyo 108-0075 (JP)
(74) Representative: 2SPL Patentanwälte PartG mbB
(86) International application number: PCT/JP2021/044864
(87) International publication number: WO 2022/138128

(57) **Abstract**

A display device (1) includes a display panel (2), an actuator (4) that comes into contact with a back surface (2b) of the display panel (2), and a woofer (5) configured to generate a sound wave from behind the display panel (2) toward the back surface (2b) of the display panel (2).

## Description

### Field

The present disclosure relates to a display device.

### Background

For example, Patent Literature 1 discloses a display device including a display panel, an actuator, and a woofer. The actuator and the woofer are provided behind the display panel. The actuator and the woofer are used to generate sound waves.

### Citation List

### Patent Literature

Patent Literature 1: WO 2018/123288

### Summary

### Technical Problem

A phase shift may occur between sound waves generated by an actuator and sound waves generated by a woofer, which may deteriorate sound quality.

One aspect of the present disclosure provides a display device capable of inhibiting deterioration of sound quality.

### Solution to Problem

A display device according to one aspect of the present disclosure includes: a display panel; an actuator that comes into contact with a back surface of the display panel; and a woofer configured to generate a sound wave from behind the display panel toward the back surface of the display panel.

### Brief Description of Drawings

FIG. 1 is an exploded perspective view illustrating an example of a schematic configuration of a display device according to an embodiment.
   FIG. 2 is an exploded perspective view illustrating the example of the schematic configuration of the display device.
   FIG. 3 is a front view illustrating the example of the schematic configuration of the display device.
   FIG. 4 is a rear view illustrating an example of a schematic configuration of a display panel including an enclosure.
   FIG. 5 is a front view illustrating an example of a schematic configuration of a back chassis including the enclosure.
   FIG. 6 is a partial rear view illustrating the example of the schematic configuration of the back chassis.
   FIG. 7 is a partial rear view illustrating an example of a schematic configuration of the back chassis provided with an actuator and a woofer.
   FIG. 8 is a partially enlarged view illustrating an example of a schematic configuration of the woofer attached to the back chassis.
   FIG. 9 is a partial cross-sectional view schematically illustrating an example of a path for sound waves generated by the woofer.
   FIG. 10 is a rear view illustrating the example of the schematic configuration of the display device.

### Description of Embodiments

An embodiment of the present disclosure will be described in detail below with reference to the drawings. Note that, in the following embodiment, the same reference signs are attached to the same parts to omit duplicate description.

The present disclosure will be described in the following item order.
1. Introduction
2. Embodiment
3. Effects

### 1. Introduction

In order to generate sound waves, an actuator and a woofer may be used in a display device including a display panel such as an OLED cell. For example, the actuator vibrates the display panel to generate sound waves in a middle and high frequency range. Vibration of a diaphragm of the woofer generates sound waves (compressional wave of air) in a middle and low frequency range.

The woofer is provided behind the display panel to make a bezel look thin at the time when the display device is viewed from the front. The woofer has been provided so as to generate sound waves in a direction other than the front (e.g., rear and lateral sides) so that the sounds generated by the woofer travel around the display panel and reach the front. In this case, the following problems may occur.

A phase shift occurs between the sound waves generated by the actuator and the sound waves generated by the woofer. As a result, sound deterioration (deterioration in sound quality) occurs due to, for example, changes in phase components from original sounds. Although correction of the phase shift in signal processing is conceivable, sufficient phase focusing is difficult in many cases.

The woofer is needed to be brought close to a screen end (edge of display panel) so that the sound waves generated by the woofer easily travel around to the front of the display panel. In this case, the size (volume) of a rear cover covering the woofer or the like is larger than that in a case where the woofer is provided near the center of the screen.

When the woofer is mounted on a wall, the woofer needs to be installed at a certain distance from the wall so that the wall does not block the sound waves generated by the woofer from traveling around. Thus, the display device cannot be provided in close contact with the wall. The woofer also needs to be provided so as to avoid a position of a wall-mounted hook so that the wall-mounted hook does not cover the woofer. This also causes a problem of an increase in the rear cover size.

According to the disclosed technique, (for example, a diaphragm of) the woofer generates sound waves toward the display panel. This causes the sound waves generated by the woofer to propagate to the display panel to vibrate the display panel. In one embodiment, a hole is provided in a back chassis located between the display panel and the woofer. This causes the sound waves generated by the woofer to propagate through the air to the display panel. The vibration of the display panel generates sound waves (substantially) the same as the sound waves generated by the woofer toward the front of the display panel. Since the actuator and the woofer vibrate the same display panel, the phase of the sound waves generated by the actuator and the phase of the sound waves generated by the woofer are easily aligned. Therefore, deterioration of sound quality due to the phase shift described above is inhibited.

Since the sound waves generated by the woofer travel forward via the display panel, the sound waves are not necessarily required to travel around. The woofer is not required to be brought close to the screen end or not required to be separated from the wall when the woofer is mounted on the wall. This increases a degree of freedom in layout of the woofer, and can also inhibit an increase in the size of the rear cover.

Since the sound waves are generated forward from the position of a display panel 2 in accordance with the woofer, sound localization is enhanced as compared with that in a case where the sound waves travel around. Since the woofer is not easily affected by the distance to the wall, stable sound quality can be obtained regardless of an installation environment.

In one embodiment, a part of the sound waves generated by the woofer may travel around. A path different from the above-described hole of the back chassis is provided. The path includes a sound path and an opening for propagating the sound waves generated by the woofer, for example. This causes a sound pressure, a reproduction band, and the like to be secured more easily than in a case where only sound waves generated by vibration of the display panel caused by the woofer are used.

In one embodiment, an enclosure partitions the display panel into a vibration region by the actuator and a vibration region by the woofer for Lch and Rch. The vibration regions are set as regions that are not invaded by each other (regions capable of independently vibrating) to prevent sound stereo feeling from being impaired.

### 2. Embodiment

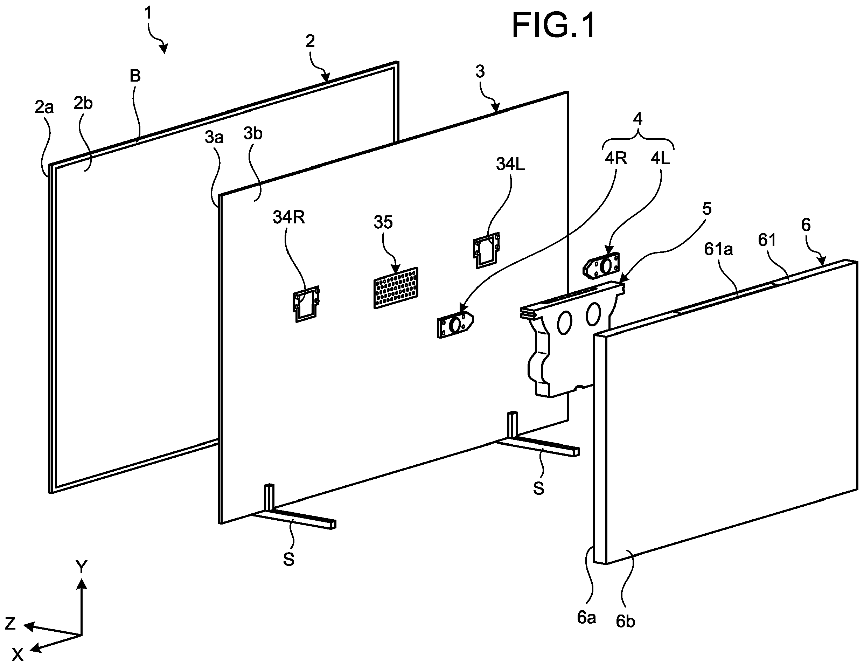

A display device according to the embodiment will be described with reference to FIGS. 1 to 10. The figures indicate an XYZ coordinate system. An X-axis direction and the Y-axis direction correspond to a horizontal direction and a vertical direction (width direction and height direction) of the display device, respectively. The Z-axis direction corresponds to the front and rear direction (thickness direction) of the display device. The Z-axis positive direction corresponds to a front direction of the display device.

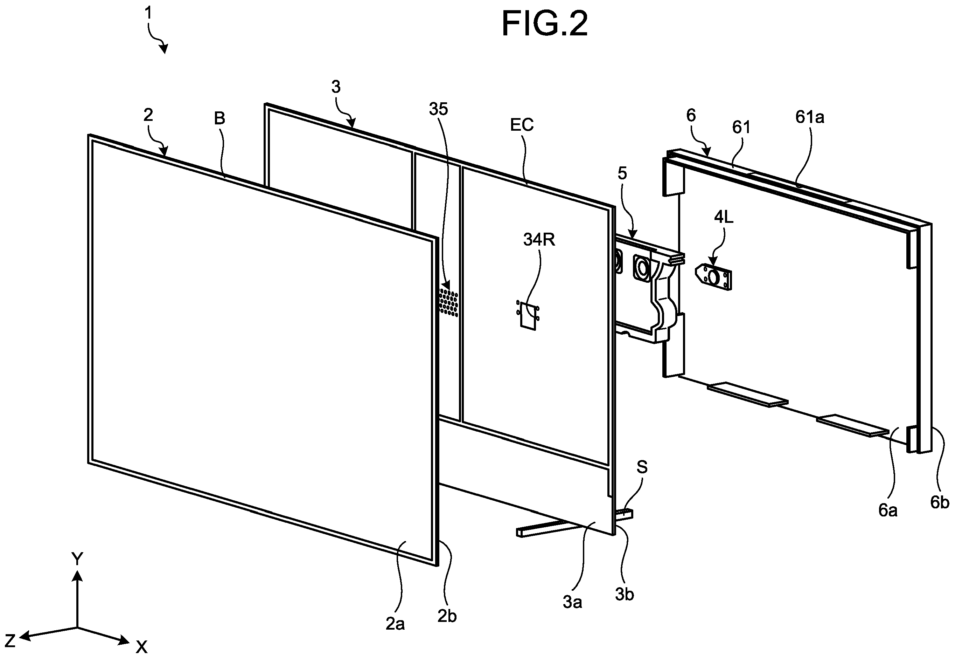

FIGS. 1 and 2 are exploded perspective views illustrating an example of a schematic configuration of the display device. A display device 1 includes a display panel 2, an enclosure EC (FIG. 2), a back chassis 3, an actuator 4, a woofer 5, and a rear cover 6. Note that, in this example, the actuator 4 includes a pair of an actuator 4L and an actuator 4R. The actuator 4L is located on a left side (X-axis negative direction side), and the actuator 4R is located on a right side (X-axis positive direction side). The enclosure EC is illustrated as provided in the back chassis 3. A front surface and a back surface of the display panel 2 are referred to and illustrated as a front surface 2a and a back surface 2b, respectively. A front surface and a back surface of the back chassis 3 are referred to and illustrated as a front surface 3a and a back surface 3b, respectively. An inner surface and an outer surface of the rear cover 6 are referred to and illustrated as an inner surface 6a and an outer surface 6b, respectively.

The display panel 2 has a form (e.g., thickness and flexibility) capable of vibrating so that sound waves can be, for example, generated and propagated. Examples of the display panel 2 as described above include an organic light emitting diode (OLED) cell. An outer frame of the display panel 2 is referred to and illustrated as a bezel B. The bezel B is not provided with other elements such as the woofer 5. The bezel B is designed to be considerably thinner than other portions of the display panel 2.

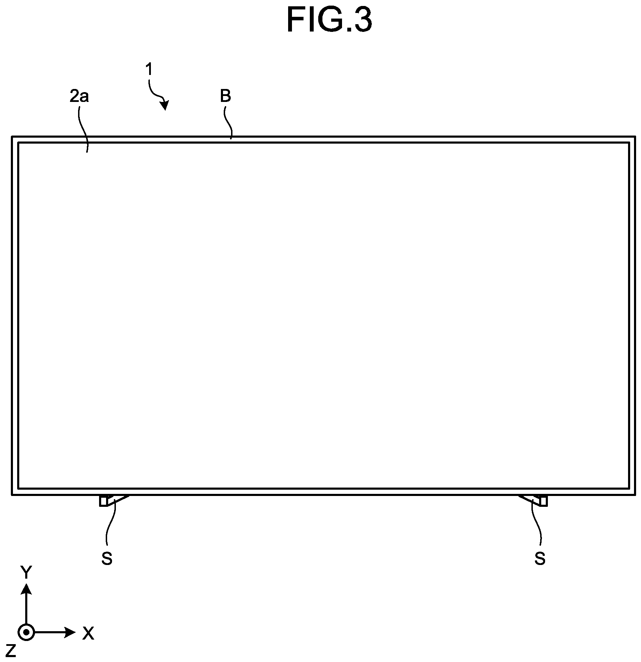

FIG. 3 is a front view illustrating the example of the schematic configuration of the display device. As illustrated in FIG. 3, the front surface 2a of the display panel 2 mainly constitutes an appearance of the display device 1 as viewed from the front. As described above, the bezel B of the display panel 2 looks quite thin.

The enclosure EC will be described with reference to FIGS. 1 and 2 (particularly FIG. 2) again. The enclosure EC is a partition member that partitions the display panel 2 so that a plurality of independent vibration regions is formed on the display panel 2. The enclosure EC fixes a boundary portion between the plurality of vibration regions on the back surface 2b of the display panel 2 to the back chassis 3. The enclosure EC is, for example, an adhesive member. Examples of an adhesive region include a double-sided tape having cushioning property (elasticity). The enclosure EC may have a thickness (length in Z-axis direction) of approximately several millimeters or less. In this example, the enclosure EC is a double-sided tape in which one surface is in contact with the back surface 2b of the display panel 2 and the other surface is in contact with the front surface 3a of the back chassis 3.

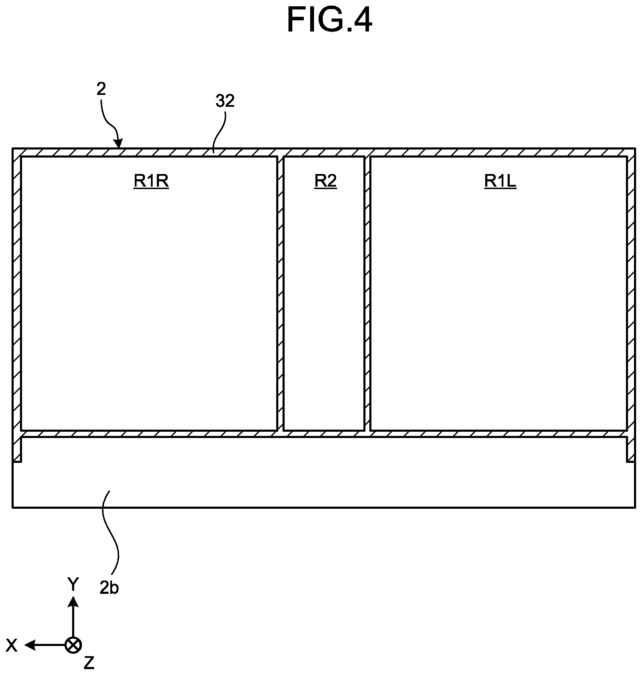

FIG. 4 is a rear view illustrating an example of a schematic configuration of the display panel including the enclosure. In the figure, the enclosure EC is hatched. In the example in FIG. 4, the enclosure EC is provided on the back surface 2b of the display panel 2 such that a vibration region R1L, a vibration region R1R, and a vibration region R2 are formed on the display panel 2. The enclosure EC surrounds each of the vibration region R1L, the vibration region R1R, and the vibration region R2. A part of the enclosure EC is located in a boundary region between adjacent vibration regions. The boundary region is fixed to the back chassis 3 via the enclosure EC, so that propagation of vibration between the vibration regions is blocked. This allows the vibration region R1L, the vibration region R1R, and the vibration region R2 to independently vibrate.

Although details will be described later, the vibration region R1L and the vibration region R1R are first vibration regions (pair of first vibration regions) vibrated by the actuator 4L and the actuator 4R. The vibration region R2 is a second vibration region vibrated by the woofer 5.

The back chassis 3 will be described with reference to FIGS. 1 and 2 again. The back chassis 3 is provided behind the display panel 2. The back chassis 3 supports the display panel 2 from behind the display panel 2. Examples of a material of the back chassis 3 include metal such as aluminum. In this example, the back chassis 3 has a plate shape having an area comparable to an area of the display panel 2 except for a pair of chassis stands S provided at a lower portion. This causes the display panel 2 to be firmly supported overall.

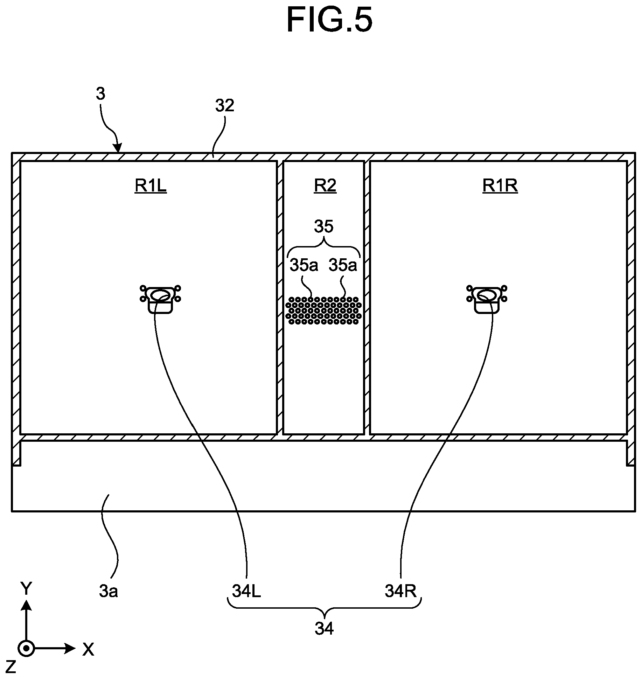

FIG. 5 is a front view illustrating an example of a schematic configuration of the back chassis including the enclosure. For easy understanding, reference signs of the vibration region R1L, the vibration region R1R, and the vibration region R2 are indicated at corresponding positions of the above-described display panel 2. The enclosure EC is provided on the front surface 3a of the back chassis 3 such that the vibration region R1L, the vibration region R1R, and the vibration region R2 are formed on the display panel 2.

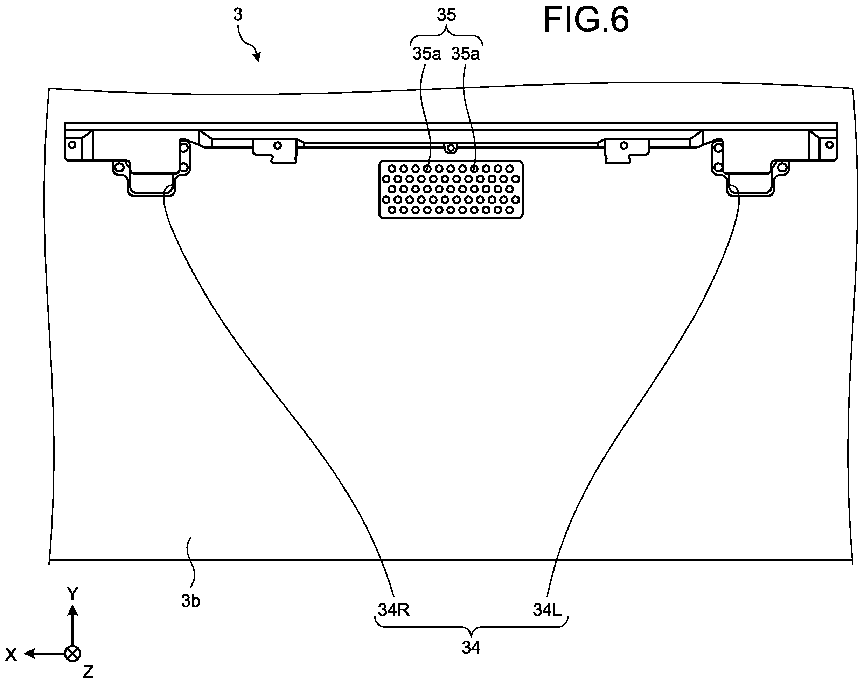

FIG. 6 is a partial rear view illustrating the example of the schematic configuration of the back chassis. As illustrated in FIGS. 5 and 6, the back chassis 3 includes an opening 34 and an opening 35. The opening 34 and the opening 35 expose a part of the back surface 2b of the display panel 2.

The opening 34 is provided in accordance with the actuator 4. Since the actuator 4 includes the actuator 4L and the actuator 4R as described above, the opening 34 includes an opening 34L corresponding to the actuator 4L and an opening 34R corresponding to the actuator 4R.

The opening 35 is provided in accordance with the woofer 5. In this example, the opening 35 includes a plurality of holes 35a. The holes 35a penetrates the back chassis 3 by punching, for example.

The actuator 4 and the woofer 5 will be described with reference to FIGS. 1 and 2 again. The actuator 4 and the woofer 5 are used to generate sound waves. A wider sound range can be obtained by using both the actuator 4 and the woofer 5 than in a case where only one of the actuator 4 and the woofer 5 is used. For example, the woofer 5 generates sound waves having a frequency (e.g., frequency in middle and low sound range) at least lower than a vibration frequency (e.g., frequency in middle and high sound range) of the actuator 4. The woofer 5 is also referred to as a subwoofer or the like.

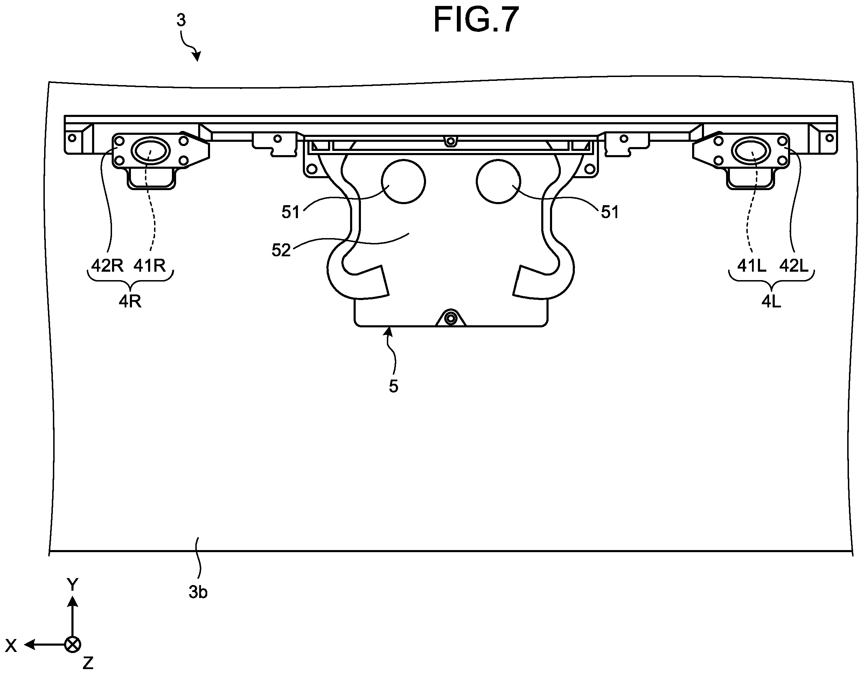

The actuator 4 is in contact with the back surface 2b of the display panel 2. At least a part of the actuator 4 is located in the opening 34 of the back chassis 3. The woofer 5 generates sound waves from behind the display panel 2 toward the back surface 2b of the display panel 2. The woofer 5 faces the back surface 2b of the display panel 2 via the opening 35 of the back chassis 3. The actuator 4 and the woofer 5 will be described also with reference to FIG. 7.

FIG. 7 is a partial rear view illustrating an example of a schematic configuration of the back chassis provided with the actuator and the woofer. Referring particularly to FIGS. 1 and 7, in this example, the woofer 5 is located at the center of the display panel 2 in the horizontal direction. The actuator 4L and the actuator 4R are located on the opposite sides across the center of the display panel 2 (across woofer 5). The actuator 4L is located on the left side of the center of the display panel 2. The actuator 4R is located on the right side of the center of the display panel 2. In other words, the woofer 5 is located between the actuator 4R and the actuator 4L. In the vertical direction, the actuator 4L, the actuator 4R, and the woofer 5 are located on a slightly upper side (Y-axis positive direction side) of the center of the display panel 2. Note, however, that, in the vertical direction, the actuator 4L, the actuator 4R, and the woofer 5 may be located at the center of the display panel 2, or may be located on a lower side of the center.

The actuator 4L includes a vibration unit 41L and a housing 42L. The vibration unit 41L comes into contact with the back surface 2b of the display panel 2 to vibrate the vibration region R1L of the display panel 2. The housing 42L is attached to the back chassis 3 such that at least a part of the vibration unit 41L is located in the opening 34L of the back chassis 3. The attachment is performed by screwing or the like. For example, the actuator 4L provided in this way can vibrate the vibration region R1L of the display panel 2.

The actuator 4R includes a vibration unit 41R and a housing 42R. The vibration unit 41R comes into contact with the back surface 2b of the vibration region R1R of the display panel 2 to vibrate the vibration region R1R of the display panel 2. The housing 42R is attached to the back chassis 3 such that at least a part of the vibration unit 41R is located in the opening 34R of the back chassis 3. For example, the actuator 4R provided in this way can vibrate the vibration region R1R of the display panel 2.

The woofer 5 includes a speaker unit 51 and a housing 52. The speaker unit 51 includes a diaphragm that vibrates so as to generate sound waves in a predetermined direction. The housing 52 is attached to the back chassis 3 such that the diaphragm of the speaker unit 51 generates sound waves toward the back surface 2b of the vibration region R2 of the display panel 2 via the opening 35 of the back chassis 3. The diaphragm of the speaker unit 51 of the woofer 5 is separated from the back surface 2b of the display panel 2. The separation distance can correspond to the depth (length in Z-axis direction) of the hole 35a of the opening 35. The sound waves generated by the woofer 5 propagate through the air to the back surface 2b of the display panel 2 via the opening 35. For example, the woofer 5 provided in this way can vibrate the vibration region R2 of the display panel 2.

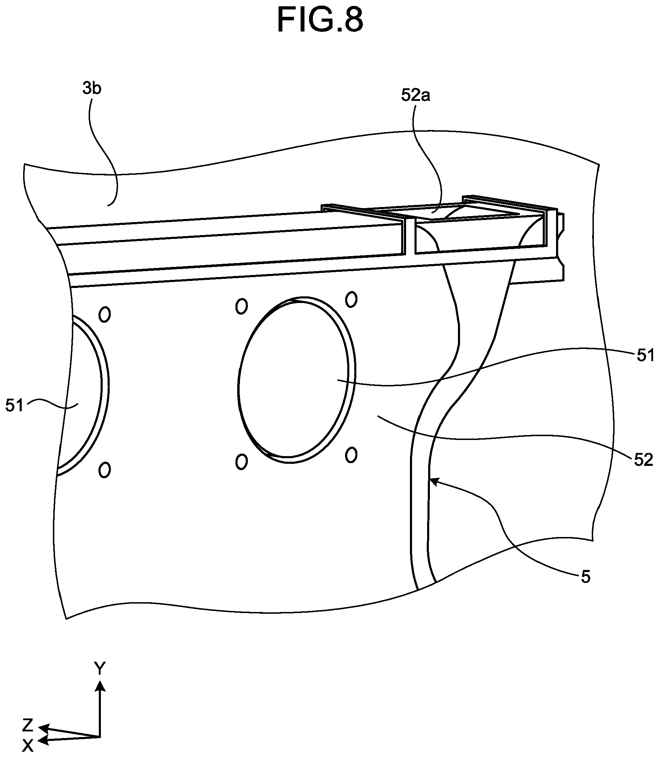

The woofer 5 will be described also with reference to FIG. 8. FIG. 8 is a partially enlarged view illustrating an example of a schematic configuration of the woofer attached to the back chassis.

The housing 52 of the woofer 5 includes a duct 52a. The duct 52a guides a part of sound waves generated by the woofer 5 (by vibration of diaphragm of speaker unit 51) to a direction other than the direction (Z-axis positive direction) toward the back surface 2b of the display panel 2. In this example, the duct 52a includes a plurality of ducts having an opening for guiding a part of the sound waves upward (in Y-axis positive direction) in an upper portion of the housing 52 and provided in both end portions of the housing 52. The duct 52a has, for example, a pipe shape extending in an up and down direction. Such structure including the duct 52a is also referred to as bass reflex speaker structure or the like.

Note that, in addition to the actuator 4 and the woofer 5 described above, various other elements (not illustrated) may be provided on the back surface 3b of the back chassis 3. Examples of the other elements include a control circuit substrate of the display panel 2.

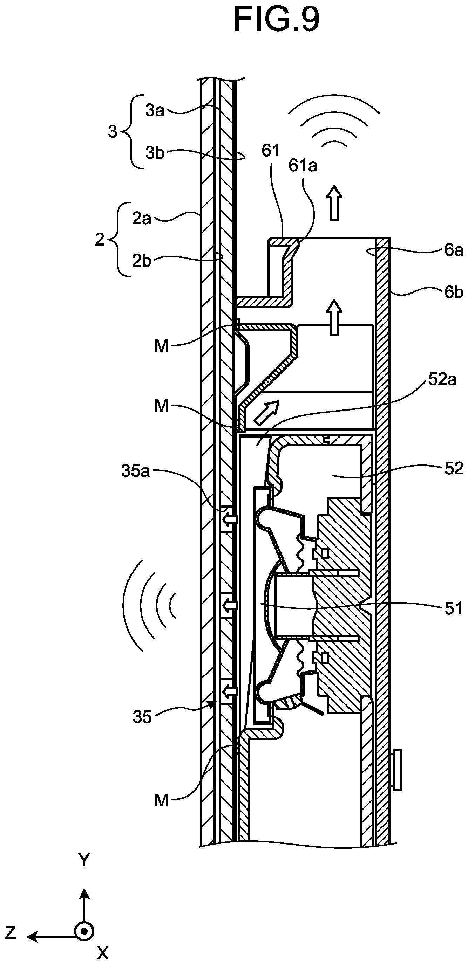

The rear cover 6 will be described with reference to FIGS. 1 and 2 again. The rear cover 6 covers elements provided on the back surface 3b of the back chassis 3 from behind such that the elements are housed between the back chassis 3 and the rear cover 6. The rear cover 6 covers at least the woofer 5 from behind, and covers the actuator 4 and the woofer 5 in the illustrated example. The rear cover 6 may have a box shape having an opening at least on the side of the back chassis 3. An upper side wall portion of four side wall portions constituting the box shape is referred to and illustrated as a side wall portion 61. A slit 61a is formed in the side wall portion 61. The slit 61a is one aspect of an opening that outputs a part of sound waves guided by the duct 52a of the woofer 5 and the space between the woofer 5 and the back chassis 3 to the outside of the rear cover 6. The space between the woofer 5 and the back chassis 3 is formed by providing, for example, a member M (FIG. 9) to be described later between the woofer 5 and the back chassis 3 so as to filling the space.

FIG. 9 is a partial cross-sectional view schematically illustrating an example of a path for sound waves generated by the woofer. A sound wave traveling direction is schematically indicated by a white arrow or the like. Note that the display panel 2 and the back chassis 3 are separated from each other via the enclosure EC (not illustrated in FIG. 9) by, for example, approximately 0.9 mm, which causes vibration space of the display panel 2 to be secured.

The sound waves generated by the woofer 5 (by vibration of diaphragm of speaker unit 51) mainly pass through the hole 35a of the opening 35, and reach the back surface 2b of the display panel 2. This vibrates (the vibration region R2 of) the display panel 2, and generates sound waves substantially the same as sound waves generated by the woofer 5. The sound waves travel toward the front of the display panel 2. Although not illustrated in FIG. 9, the sound waves generated by the actuator 4 are similarly directed toward the front of the display panel 2. Therefore, the phase of the sound waves generated by the actuator 4 and the phase of the sound waves generated by the woofer 5 are easily aligned at the position in front of the display panel 2.

A part of the sound waves generated by the woofer 5 passes through the duct 52a and the slit 61a described above, and is output to the outside of the rear cover 6. Furthermore, in the example in FIG. 9, the member M (e.g., cushioning member) is provided between the woofer 5 and the back chassis 3, which forms the space between the woofer 5 and the back chassis 3. A part of the sound waves generated by the woofer 5 is also output through this space. A part of the output sound waves travels around the display panel 2 to the front. This also causes the sound waves to travel toward the front of the display panel 2. Providing another path for the sound waves generated by the woofer 5 in this way causes a sound pressure, a reproduction band, and the like to be easily secured.

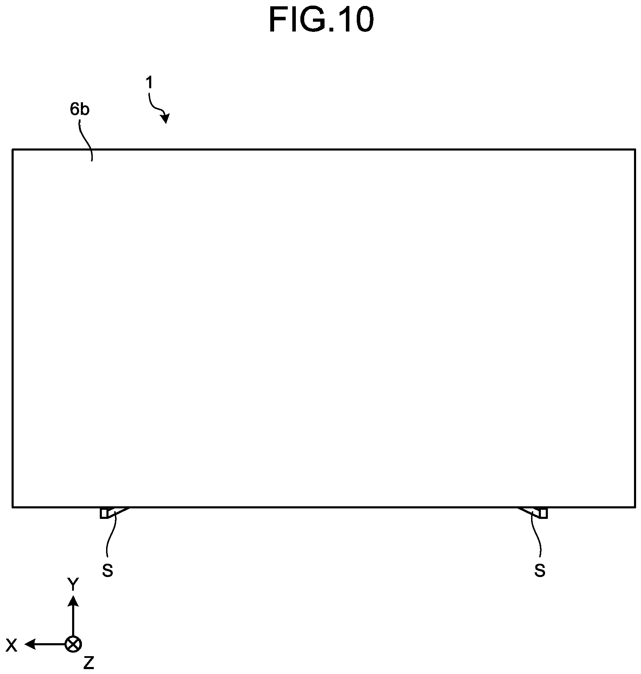

FIG. 10 is a rear view illustrating an example of a schematic configuration of a display device. As illustrated in FIG. 10, the outer surface 6b of the rear cover 6 mainly constitutes the appearance of the display device 1 as viewed from the back.

Although the embodiment of the present disclosure has been described above, the technical scope of the present disclosure is not limited to the above-described embodiment as it is, and various modifications can be made without departing from the gist of the present disclosure. Furthermore, components of different embodiments and variations may be appropriately combined.

### 3. Effects

The display device 1 described above will be described as follows, for example. As described with reference to FIGS. 1, 2, and the like, the display device 1 includes a display panel 2 (e.g., OLED cell), an actuator 4 that comes into contact with a back surface 2b of the display panel 2, and a woofer 5 configured to generate a sound wave from behind the display panel 2 toward the back surface 2b of the display panel 2.

According to the above-described display device 1, sound waves generated by the woofer 5 vibrate the display panel 2. The actuator 4 and the woofer 5 vibrate the same display panel 2, whereby the phase of the sound waves generated by the actuator 4 and the phase of the sound waves generated by the woofer 5 are easily aligned. Therefore, deterioration of sound quality due to the phase shift between both sound waves can be inhibited.

As described with reference to FIGS. 1, 2, 5, 6, and the like, the display device 1 may include a back chassis 3 that supports the display panel 2 from behind the display panel 2, in which the back chassis 3 may include an opening 35 (e.g., plurality of holes 35a) that exposes a part of the back surface 2b of the display panel 2, and the woofer 5 may be configured to face the back surface 2b of the display panel 2 via the opening 35 of the back chassis 3. This allows the sound waves generated by the woofer 5 to propagate through the air to the back surface 2b of the display panel 2 via the opening 35.

As described with reference to FIGS. 1, 2, 7 to 9, and the like, the woofer 5 may include: a diaphragm (in speaker unit 51) that vibrates so as to generate the sound wave in a predetermined direction; and the housing 52 including the duct 52a that guides a part of the sound wave generated by the diaphragm in a direction other than a direction (Z-axis positive direction) toward the back surface 2b of the display panel 2. The display device 1 may include a rear cover that covers at least the woofer 5 from behind. The rear cover 6 may have an opening (slit 61a) that outputs a part of the sound waves guided by the duct 52a to the outside of the rear cover 6. This allows the sound waves generated by the woofer 5 to be output toward the front even through a path different from the opening 35. As a result, for example, a sound pressure, a reproduction band, and the like can be secured more easily than in a case where only sound waves generated by vibration of the display panel 2 caused by the woofer 5 are used.

As described with reference to FIGS. 2, 4, 5, and the like, the display device 1 may include an enclosure EC (partition member) that partitions the display panel 2 so that a plurality of independent vibration regions is formed on the display panel 2, in which the plurality of vibration regions may include: a first vibration region (vibration region R1L and vibration region R1R) that is vibrated by the actuator 4; and a second vibration region (vibration region R2) that is vibrated by a sound wave generated by the woofer 5. The enclosure EC may be an adhesive member that fixes a boundary portion between a plurality of vibration regions on the back surface 2b of the display panel 2 to the back chassis 3. The actuator 4 is a pair of the actuator 4L and the actuator 4R provided on both side portions of the central portion of the display panel 2. The first vibration region may include a pair of first vibration regions (vibration region R1L and vibration region R1L) each vibrated by a corresponding actuator of the pair of the actuator 4L and the actuator 4R. The woofer 5 may be located between the pair of the actuator 4L and the actuator 4R. Sound waves generated by vibration of each of such vibration regions prevent sound stereo feeling from being impaired.

The woofer 5 may generate sound waves of a frequency at least lower than the vibration frequency of the actuator 4. This can generate sound waves having a wider sound range as a whole than in a case where only the actuator 4 is used, for example.

The effects in the embodiment described in the present specification are merely examples and not limitations. Other effects may be exhibited.

In the above-described embodiment, an example in which a panel 21 of the display panel 2 is an OLED cell has been described. Note, however, that not only the OLED cell but any display panel that is vibrated by the actuator 4 or that can be vibrated by sound waves generated by the woofer 5 may be used.

In the above-described embodiment, an example in which the opening 35 has a plurality of holes 35a has been described. Note, however, that only one hole may be provided, and the shape and the like of the hole is not limited to the illustrated example.

In the above-described embodiment, a pair of the actuator 4L and the actuator 4R disposed on both sides of the woofer 5 have been described as the actuator 4 in an example. Note, however, that one actuator may be provided, or three or more actuators may be provided. Furthermore, in the above-described embodiment, an example in which one woofer 5 is disposed at the center of the display panel 2 has been described. Note, however, that two or more woofers may be provided. For example, a pair of woofers for Lch and Rch may be provided on both sides of the central portion of the display panel 2. When actuators and/or woofers are provided in different numbers and arrangements, the enclosure EC may partition corresponding vibration regions. This can provide sound stereo feeling in a wider sound range, for example. This advantage becomes apparent particularly when many vibration regions having a large screen size of the display panel 2 can be formed.

In the above-described embodiment, an example in which a part of sound waves generated by the woofer 5 is guided upward by the duct 52a of the housing 52 of the woofer 5 has been described. Note, however, that the duct may guide the part of sound waves in any direction other than the front. The number of ducts is also not limited to the illustrated example. The same applies to the slit 61a of the rear cover 6. That is, a slit may be formed in a portion other than the side wall portion 61 of the rear cover 6.

Note that the present technology can also have the configurations as follows.
(1) A display device comprising:
   a display panel;
   an actuator that comes into contact with a back surface of the display panel; and
   a woofer configured to generate a sound wave from behind the display panel toward the back surface of the display panel.
(2) The display device according to (1), further comprising
   a back chassis that supports the display panel from behind the display panel,
   wherein the back chassis includes an opening that exposes a part of a back surface of the display panel, and
   the woofer is configured to face the back surface of the display panel via the opening of the back chassis.
(3) The display device according to (2),
   wherein the opening includes a plurality of holes.
(4) The display device according to (2) or (3),
   wherein the woofer includes:
   a diaphragm that vibrates so as to generate the sound wave in a predetermined direction; and
   a housing including a duct that guides a part of the sound wave generated by the diaphragm in a direction other than a direction toward a back surface of the display panel.
(5) The display device according to (4), further comprising
   a rear cover that covers at least the woofer from behind,
   wherein the rear cover includes an opening that outputs the part of a sound wave guided by the duct to an outside of the rear cover.
(6) The display device according to any one of (1) to (5), further comprising
   a partition member that partitions the display panel so that a plurality of independent vibration regions is formed on the display panel,
   wherein the plurality of vibration regions includes:
      a first vibration region that is vibrated by the actuator; and
      a second vibration region that is vibrated by a sound wave generated by the woofer.
(7) The display device according to (6),
   wherein the partition member is an adhesive member that fixes a boundary portion between the plurality of vibration regions on a back surface of the display panel to a back chassis that supports the display panel from the back surface.
(8) The display device according to (6) or (7),
   wherein the actuator is a pair of actuators provided on both side portions of the central portion of the display panel, and
   the first vibration region includes a pair of first vibration regions each vibrated by a corresponding actuator of the pair of actuators.
(9) The display device according to claim 8,
   wherein the woofer is located between the pair of actuators.
(10) The display device according to any one of (1) to (9),
   wherein the woofer generates a sound wave of a frequency at least lower than a vibration frequency of the actuator.
(11) The display device according to any one of (1) to (10),
   wherein the display panel is an OLED cell.

### Reference Signs List

1 DISPLAY DEVICE
2 DISPLAY PANEL
3 BACK CHASSIS
4 ACTUATOR
5 WOOFER
6 REAR COVER
34 OPENING
35 OPENING
35a HOLE
52 HOUSING
52a DUCT
61a SLIT (OPENING)
EC ENCLOSURE (PARTITION MEMBER)
M MEMBER
R1L VIBRATION REGION
R1R VIBRATION REGION
R2 VIBRATION REGION

## Claims

1. A display device comprising:
a display panel;
an actuator that comes into contact with a back surface of the display panel; and
a woofer configured to generate a sound wave from behind the display panel toward the back surface of the display panel.

2. The display device according to claim 1, further comprising
a back chassis that supports the display panel from behind the display panel,
wherein the back chassis includes an opening that exposes a part of a back surface of the display panel, and
the woofer is configured to face the back surface of the display panel via the opening of the back chassis.

3. The display device according to claim 2,
wherein the opening includes a plurality of holes.

4. The display device according to claim 2,
wherein the woofer includes:
a diaphragm that vibrates so as to generate the sound wave in a predetermined direction; and
a housing including a duct that guides a part of the sound wave generated by the diaphragm in a direction other than a direction toward a back surface of the display panel.

5. The display device according to claim 4, further comprising
a rear cover that covers at least the woofer from behind,
wherein the rear cover includes an opening that outputs the part of a sound wave guided by the duct to an outside of the rear cover.

6. The display device according to claim 1, further comprising
a partition member that partitions the display panel so that a plurality of independent vibration regions is formed on the display panel,
wherein the plurality of vibration regions includes:
a first vibration region that is vibrated by the actuator; and
a second vibration region that is vibrated by a sound wave generated by the woofer.

7. The display device according to claim 6,
wherein the partition member is an adhesive member that fixes a boundary portion between the plurality of vibration regions on a back surface of the display panel to a back chassis that supports the display panel from the back surface.

8. The display device according to claim 6,
wherein the actuator is a pair of actuators provided on both side portions of the central portion of the display panel, and
the first vibration region includes a pair of first vibration regions each vibrated by a corresponding actuator of the pair of actuators.

9. The display device according to claim 8,
wherein the woofer is located between the pair of actuators.

10. The display device according to claim 1,
wherein the woofer generates a sound wave of a frequency at least lower than a vibration frequency of the actuator.

11. The display device according to claim 1,
wherein the display panel is an OLED cell.
